# EUROPÄISCHE PATENTANMELDUNG

(11) **EP 4 656 531 A1**
(43) Veröffentlichungstag der Anmeldung: **03.12.2025**
(21) Anmeldenummer: 25175427.1
(22) Anmeldetag: 09.05.2025
(51) Int. Cl.: B65B 7/16, B29C 65/18, B29C 65/74, B65B 51/14, B29C 65/00, B65B 61/06

(54) **VERFAHREN UND VORRICHTUNG ZUM AUFBRINGEN EINER DECKELFOLIE AUF EINE VERPACKUNGSSCHALE**

(30) Priorität: 31.05.2024 DE 102024115218
(71) Anmelder: MULTIVAC Sepp Haggenmüller SE & Co. KG, 87787 Wolfertschwenden (DE)
(72) Erfinder: ICKERT, Lars, 87437 Kempten (DE); FACKLER, Sebastian, 87724 Ottobeuren (DE)
(74) Vertreter: Grünecker Patent- und Rechtsanwälte PartG mbB

(57) **Zusammenfassung**

Ein Verfahren zum Aufbringen einer Deckelfolie (8) auf eine Verpackungsschale (7) mittels einer Verschließstation (2, 20), wobei die Verschließstation (2, 20) eine Verpackungsschalenaufnahme (6) zum Aufnehmen der Verpackungsschale (7), ein Werkzeugoberteil (3), ein Werkzeugunterteil (4) und einen Klemmrahmen (31) aufweist, wobei am Werkzeugoberteil (3) ein beheizter, bewegbarer Siegelrahmen (5) angebracht ist, umfasst die folgenden Schritte: Klemmen eines Klemmbereichs (81) der Deckelfolie (8) zwischen dem Klemmrahmen (31) und dem Werkzeugoberteil (3), Bewegen des Siegelrahmens (5) von oben auf die Deckelfolie (8), um einen Siegelbereich (82) der Deckelfolie (8) an die Verpackungsschale (7) zu siegeln, und Schneiden der Deckelfolie (8) von unten mit einem Messer (9).

## Beschreibung

Die vorliegende Erfindung bezieht sich auf ein Verfahren zum Aufbringen einer Deckelfolie auf eine Verpackungsschale, eine Verschließstation zum Aufbringen einer Deckelfolie auf eine Verpackungsschale sowie auf eine Schalenverschließmaschine mit einer Verschließstation.

### Stand der Technik

Aus dem Stand der Technik sind Schalenverschließmaschinen mit Verschließstationen zum Aufbringen einer Deckelfolie auf eine Verpackungsschale bekannt. Die Deckelfolie wird üblicherweise vor oder nach dem Aufbringen auf die Verpackungsschale geschnitten.

Üblicherweise ist zum Schneiden der Deckelfolie ein Messer an einem beheizten Siegelrahmen fest oder bewegbar angebracht und wird von oben nach unten bewegt, um die Deckelfolie von oben zu schneiden. Der Nachteil dieser Anwendungen besteht darin, dass sich das Messer durch die Montage am beheizten Siegelrahmen erwärmt. Dadurch besteht die Gefahr, dass die Deckelfolie am Messer kleben bleibt und das Messer verschmutzt. Auch muss ein übermäßig stark erhitztes Messer erst abkühlen, bis es wieder für den Verpackungsbetrieb verwendet werden kann. Aufgrund der Montage am Siegelrahmen ist oftmals auch eine Zugänglichkeit zum Messer, zum Beispiel zu Wartungszwecken, schwierig. Insgesamt führt dies zu hohen Stillstandszeiten und Wartungskosten. Auch wird bei dieser Variante die Deckelfolie oftmals ungenau bezüglich der Verpackungsschale geschnitten. Weiterhin besteht die Gefahr, dass die Deckelfolie beim Zurückbewegen des Messers nach dem Schnitt nach oben, also von der Verpackungsschale weg, von der Verpackungsschale weggebogen wird. Dies verschlechtert die Qualität der hergestellten Verpackungen und führt zu hohem Ausschuss.

Alternativ ist, wie in EP2441683 B1 gezeigt, das Messer fest am Werkzeugunterteil angebracht. Der Siegelrahmen und die Verpackungsschalenaufnahme werden zusammen mit der Deckelfolie und der Verpackungsschale zum Werkzeugunterteil nach unten bewegt und dadurch die Deckelfolie durch das Messer von unten geschnitten. Auch bei dieser Variante wird die Deckelfolie oftmals ungenau bezüglich der Verpackungsschale geschnitten. Weiterhin ist die Positionierung des Schnitts der Deckelfolie bezüglich der Verpackungsschale eingeschränkt.

### Aufgabe

Aufgabe der Erfindung ist es, eine Schalenverschließmaschine zur Verfügung zu stellen, anhand welcher sich die vorangehend in Zusammenhang mit dem zitierten Stand der Technik beschriebenen Nachteile durch eine vorteilhafte Bauweise beheben lassen. Ferner ist es die Aufgabe der Erfindung, ein dementsprechendes Verfahren zum Aufbringen einer Deckelfolie auf eine Verpackungsschale zur Verfügung zu stellen.

### Lösung

Diese Aufgabe wird erfindungsgemäß durch ein Verfahren zum Aufbringen einer Deckelfolie auf eine Verpackungsschale gemäß dem Anspruch 1, eine Verschließstation zum Aufbringen einer Deckelfolie auf eine Verpackungsschale gemäß dem Anspruch 11 und/oder eine Schalenverschließmaschine mit einer Verschließstation gemäß dem Anspruch 15 gelöst.

Vorteilhafte Weiterbildungen der Erfindung sind in den Unteransprüchen erfasst.

Ein Aspekt der Erfindung betrifft ein Verfahren zum Aufbringen einer Deckelfolie auf eine Verpackungsschale mittels einer Verschließstation. Die Verschließstation umfasst eine Verpackungsschalenaufnahme zum Aufnehmen der Verpackungsschale, ein Werkzeugoberteil, ein Werkzeugunterteil und einen Klemmrahmen. Am Werkzeugoberteil ist ein beheizter Siegelrahmen angebracht. Das Verfahren umfasst die folgenden Schritte: Klemmen eines Klemmbereichs der Deckelfolie zwischen dem Klemmrahmen und dem Werkzeugoberteil, Durchführen einer Relativbewegung zwischen dem Siegelrahmen und der Verpackungsschalenaufnahme, um einen Siegelbereich der Deckelfolie von oben an die Verpackungsschale zu siegeln, und Schneiden der Deckelfolie von unten mit einem Messer. Dieses Verfahren ermöglicht es, die Deckelfolie einfach und effizient zu trennen. Im Idealfall kann durch das Schneiden von unten der Schnitt der Deckelfolie bezüglich der Verpackungsschale besonders genau platziert werden. Es kann eine Qualität der hergestellten Verpackung, d.h. der mit der Deckelfolie gesiegelten Verpackungsschale, verbessert und optional ein Ausschuss reduziert werden.

Die Verpackungsschale kann flach ausgebildet sein oder zumindest abschnittsweise eine Kontur, insbesondere eine Vertiefung, aufweisen. Die Verpackungsschale kann einen Rand aufweisen. Die Deckelfolie kann an den Rand gesiegelt werden.

Der Klemmbereich kann umlaufend geschlossen sein. Optional können mehrere Klemmbereiche, insbesondere einander gegenüberliegende Klemmbereiche, vorgesehen sein.

Das Material der Deckelfolie kann jedes geeignete Material sein. Beispielsweise kann das Material Polyethylen (PE) oder Ethylvinylalkohol (EVOH) sein oder umfassen. Optional kann die Deckelfolie aus einem Verbundwerkstoff aus mehreren Folien, beispielsweise aus Polyethylen (PE) oder Ethylvinylalkohol (EVOH), bestehen.

Eine Dicke der Deckelfolie kann, insbesondere in unbearbeitetem Zustand, kleiner als 100 µm, insbesondere kleiner als 90 µm sein. Die Dicke der Deckelfolie kann, insbesondere in unbearbeitetem Zustand, größer als 70 µm, insbesondere größer als 80 µm sein. Die Dicke der Deckelfolie kann, insbesondere in unbearbeitetem Zustand, konstant sein.

Der Siegelbereich der Deckelfolie kann sich zwischen dem Klemmbereich befinden. Beim Siegeln des Siegelbereichs von oben an die Verpackungsschale kann die Deckelfolie oberhalb der Verpackungsschale in der Verschließstation angeordnet sein. Es kann also eine Unterseite der Deckelfolie an eine Oberseite der Verpackungsschale, insbesondere deren Randes, gesiegelt werden. Die Relativbewegung zwischen dem Siegelrahmen und der Verpackungsschalenaufnahme kann durch Bewegen des Siegelrahmens in Richtung der Verpackungsschalenaufnahme und/oder durch Bewegen der Verpackungsschalenaufnahme, optional gemeinsam mit dem Werkzeugunterteil, in Richtung des Siegelrahmens erfolgen. Die Relativbewegung zwischen dem Siegelrahmen und der Verpackungsschalenaufnahme kann so groß sein, dass der Siegelrahmen und die Verpackungsschalenaufnahme hinreichend fest aneinandergepresst werden, um die Deckelfolie an die Verpackungsschale zu siegeln.

Der Siegelrahmen kann eine Siegelfläche zum Siegeln der Deckelfolie und eine Innenfläche aufweisen. Die Innenfläche kann sich zwischen der Siegelfläche befinden. Der Siegelrahmen kann flach ausgebildet sein. Zum Beispiel kann der Siegelrahmen eine flache Siegelfläche und eine flache Innenfläche aufweisen. Oder der Siegelrahmen kann zumindest eine Konkavität aufweisen. Zum Beispiel kann der Siegelrahmen eine flache Siegelfläche und eine konkave Innenfläche aufweisen.

Insbesondre nach dem Klemmen des Klemmbereich, kann ein Bereich der Deckelfolie zwischen dem Klemmbereich an die Innenfläche des Siegelrahmens gesaugt oder gedrückt werden. Dadurch kann der Bereich der Deckelfolie gedehnt werden. Die Deckelfolie kann mittels einer Saug- und/oder Gebläsevorrichtung an die Innenfläche gesaugt/gedrückt werden. Der Bereich der Deckelfolie kann einen nachfolgend beschriebenen Trennbereich der Deckelfolie, und optional den Siegelbreich, umfassen.

Die Innenfläche des Siegelrahmens kann mittels einer, insbesondere elektrischen, Heizvorrichtung beheizt werden. Die Siegelfläche des Siegelrahmens kann mittels einer, insbesondere elektrischen, Heizvorrichtung beheizt werden. Die Siegelfläche und die Innenfläche können mittels einer gemeinsamen Heizvorrichtung oder mittels unterschiedlicher Heizvorrichtungen beheizt werden. Eine Temperatur der Heizvorrichtung und/oder der Innenfläche des Siegelrahmens und/oder der Siegelfläche des Siegelrahmens kann von der Deckelfolie, insbesondere deren Material und/oder deren Dicke, abhängen. Die Temperatur der Innenfläche des Siegelrahmens kann niedriger als eine Schmelztemperatur der Deckelfolie sein. Die Temperatur der Innenfläche kann einer Temperatur entsprechen, bei der die Deckelfolie verformbar ist. Die Temperatur der Innenfläche kann größer als 40 °C, insbesondere größer als 60 °C, sein. Die Temperatur der Innenfläche kann kleiner als 100 °C, insbesondere kleiner als 80 °C, sein. Die Temperatur der Siegelfläche kann mindestens einer Aktivierungstemperatur der Siegelschicht entsprechen. Die Temperatur der Siegelfläche kann größer als 120 °C, insbesondere größer als 150 °C, sein. Die Temperatur der Siegelfläche kann kleiner als 220 °C, insbesondere kleiner als 200 °C, sein.

Beim Schneiden der Deckelfolie von unten mit dem Messer kann die Deckelfolie, insbesondere nach dem Klemmen des Klemmbereichs, oberhalb des Messers in der Verschließstation angeordnet sein. Das Messer kann die Deckelfolie ausgehend von einer Unterseite der Deckelfolie durchtrennen. Dadurch kann die Deckelfolie besonders genau und zuverlässig geschnitten werden.

Vor dem Siegeln kann ein Inneres der Verpackungsschale evakuiert und/oder begast werden. Dadurch kann eine Qualität und/oder Haltbarkeit eines Inhalts der Verpackung gezielt beeinflusst, insbesondere verbessert, werden. Zudem kann die Optik der Verpackung verbessert werden.

Vorzugsweise werden der Klemmrahmen und das Werkzeugoberteil relativ zueinander bewegt, sodass der Klemmbereich der Deckelfolie dazwischen eingeklemmt wird, wobei das Werkzeugunterteil und das Werkzeugoberteil, insbesondere gemeinsam mit dem Klemmrahmen, relativ zueinander bewegt werden, sodass der Klemmbereich der Deckelfolie mittelbar zwischen dem Werkzeugunterteil und dem Werkzeugoberteil eingeklemmt wird. Dadurch kann die Deckelfolie besonders einfach und genau bezüglich der Verpackungsschale positioniert und fixiert werden. Bei der mittelbaren Klemmung kann der Klemmbereich der Deckelfolie zwischen dem Werkzeugoberteil und dem Klemmrahmen angeordnet sein. Der Klemmrahmen kann an dem Werkzeugoberteil bewegbar montiert sein. Der Klemmrahmen kann über eine, insbesondere mechanische, elektrische, pneumatische oder hydraulische, Antriebsvorrichtung angetrieben werden. Die Antriebsvorrichtung kann zwischen dem Werkzeugoberteil und dem Klemmrahmen montiert sein, insbesondere außerhalb eines Bereichs, in dem die Deckelfolie angeordnet wird. Der Klemmrahmen kann in Richtung des Werkzeugoberteils bewegt werden, sodass der Klemmbereich der Deckelfolie dazwischen eingeklemmt wird. Der Klemmrahmen kann abhängig von der Deckelfolie, insbesondere deren Dicke, und/oder einer erforderlichen Klemmkraft zum Klemmen der Deckelfolie unterschiedlich weit an das Werkzeugoberteil bewegt werden. Die Klemmkraft kann zwischen dem Werkzeugoberteil und dem Klemmrahmen erzeugt werden. Zwischen dem Klemmrahmen und dem Werkzeugoberteil kann ein Spalt bestehen, während der Klemmbereich der Deckelfolie zwischen dem Werkzeugoberteil und dem Klemmrahmen geklemmt ist. Der Klemmrahmen kann beispielsweise plattenförmig ausgebildet sein. Der Klemmrahmen kann räumlich zwischen dem Werkzeugoberteil und dem Werkzeugunterteil angeordnet sein.

Das Werkzeugunterteil kann in Richtung des Werkzeugoberteils, insbesondere des Klemmrahmens, bewegt, insbesondere dagegen gedrückt, werden. Optional oder zusätzlich kann das Werkzeugoberteil gemeinsam mit dem Klemmrahmen in Richtung des Werkzeugunterteils bewegt, insbesondere dagegen gedrückt, werden. Dazu kann das Werkzeugunterteil und/oder das Werkzeugoberteil über eine, insbesondere mechanische, elektrische, pneumatische oder hydraulische, Antriebsvorrichtung angetrieben werden. Durch die Relativbewegung zwischen dem Werkzeugunterteil und dem Werkzeugoberteil kann die Klemmung der zwischen dem Werkzeugoberteil und dem Klemmrahmen angeordneten Deckelfolie, insbesondere die auf die Deckelfolie wirkende Klemmkraft, erhöht werden. Die Klemmkraft kann über den Klemmrahmen zwischen dem Werkzeugoberteil und dem Werkzeugunterteil erzeugt werden. Insbesondere kann das Werkzeugunterteil und/oder das Werkzeugoberteil so weit bewegt werden, dass der Spalt zwischen dem Klemmrahmen und dem Werkzeugoberteil geschlossen wird. Um die Verschließstation zu schließen, kann also das Werkzeugoberteil in Richtung des Werkzeugunterteils und/oder das Werkzeugunterteil in Richtung des Werkzeugoberteils bewegt, insbesondere daran gepresst, werden. Das Werkzeugunterteil und/oder das Werkzeugoberteil kann so weit bewegt werden, dass es hinreichend fest, insbesondere mit einer ausreichenden Klemmkraft, an das Werkzeugoberteil bzw. Werkzeugunterteil gepresst wird, um die nachfolgenden Schritte des Siegelns, Trennens der Deckelfolie und/oder eines Evakuierens oder Begasens der Verpackungsschale durchzuführen.

Vorzugsweise werden der Siegelrahmen und die Verpackungsschalenaufnahme gemeinsam mit dem Siegelbereich der Deckelfolie und der Verpackungsschale in Richtung des Werkzeugunterteils abgesenkt, insbesondere wobei die Deckelfolie während der Absenkbewegung durch den Kontakt der Deckelfolie mit dem Messer geschnitten wird. Dadurch kann die Deckelfolie besonders einfach und genau durchtrennt werden. Es kann ein Antrieb des Messers entfallen. Der Siegelrahmen kann über eine, insbesondere mechanische, elektrische, pneumatische oder hydraulische, Hubeinrichtung angetrieben werden. Die Verpackungsschalenaufnahme kann über eine, insbesondere mechanische, elektrische, pneumatische oder hydraulische, Antriebsvorrichtung angetrieben werden. Optional kann die Hubeinrichtung des Siegelrahmens die Verpackungsschalenaufnahme passiv mitbewegen. Zum Beispiel kann die Verpackungsschalenaufnahme, insbesondere über zumindest eine mit dem Werkzeugunterteil und der Verpackungsschalenaufnahme verbundene (Druck-)Feder, gegenüber dem Werkzeugunterteil passiv bewegbar sein. Dadurch können Kosten und Bauraum gespart und eine Komplexität der Verschließstation reduziert werden. Ein Maß der Bewegung des Siegelrahmens und der Verpackungsschalenaufnahme kann vom Material und/oder einer Zugfestigkeit der Deckelfolie abhängen. Die Zugfestigkeit der Deckelfolie kann im Kontext der Erfindung eine Reißfestigkeit der Deckelfolie sein. Sie kann die maximale mechanische Zugspannung angeben, mit der die Deckelfolie belastet werden kann, bis sie reißt. Das Maß der Bewegung des Siegelrahmens und der Verpackungsschalenaufnahme kann durch einen Anschlag am Werkzeugunterteil begrenzt werden. Im einfachsten Fall kann das Werkzeugunterteil die Bewegung begrenzen. Optional kann die Feder zwischen dem Werkzeugunterteil und der Verpackungsschalenaufnahme als Gegenhalt für den Siegelrahmen wirken und/oder dessen Bewegung begrenzen.

Vorzugsweise wird die Deckelfolie, insbesondere ein Trennbereich, durch die Absenkbewegung zwischen dem Klemmrahmen und der Verpackungsschalenaufnahme gespannt. Die Absenkbewegung kann durch die vorgehend beschriebene Bewegung des Siegelrahmens und der Verpackungsschalenaufnahme gemeinsam mit dem Siegelbereich der Deckelfolie und der Verpackungsschale in Richtung des Werkzeugunterteils erzeugt werden. Die Absenkbewegung kann insbesondere erfolgen, wenn der Klemmbereich der Deckelfolie zwischen dem Werkzeugoberteil und dem Werkzeugunterteil und wenn der Siegelbereich der Deckelfolie und die Verpackungsschale geklemmt sind. Wenn auf die Deckelfolie im Trennbereich eine Zugspannung herrscht, kann diese dort besonders präzise durchtrennt werden. Die Zugspannung kann konstant über den gesamten Trennbereich sein. Dadurch kann vermieden werden, dass am Trennbereich unterschiedlich große Zugspannungen herrschen, die eine zuverlässige Trennung der Deckelfolie an einem gewünschten Abschnitt verhindern können. Somit kann die Zuverlässigkeit und Effizienz des Verfahrens verbessert werden. Das Maß der Absenkbewegung zum Spannen kann von einer Verformbarkeit und/oder Zugfestigkeit der Deckelfolie abhängen. Die Absenkbewegung zum Spannen der Deckelfolie kann höchstens so groß sein, dass die Zugspannung der Deckelfolie nicht bis zu deren Zugfestigkeit erhöht wird. Indem die Deckelfolie durch die Absenkbewegung gespannt wird, kann das Erfordernis eines zusätzlichen Bauteils zum Spannen der Deckelfolie entfallen. Der Siegelrahmen und die Verpackungsschalenaufnahme können also je eine Doppelfunktion ausführen, nämlich einerseits die Deckelfolie siegeln bzw. die Verpackungsschale aufnehmen und andererseits die Zugspannung im Trennbereich der Deckelfolie erzeugen bzw. erhöhen. Dadurch können ein Bauraum verkleinert, ein Wartungsaufwand reduziert und Kosten für die Verschließstation und das Verfahren gesenkt werden.

Vorzugsweise schneidet das Messer die Deckelfolie in einem Trennbereich, insbesondere wobei sich der Trennbereich zwischen dem Klemmbereich und dem Siegelbereich befindet. Dadurch kann sichergestellt werden, dass die Siegelung zwischen der Deckelfolie und der Verpackungsschale nicht durch das Messer beschädigt wird. Es kann eine Qualität der hergestellten Verpackungen verbessert und optional ein Ausschuss reduziert werden.

Vorzugsweise ist das Messer relativ zum Werkzeugunterteil bewegbar am Werkzeugunterteil montiert. Dadurch kann die Deckelfolie besonders genau und zuverlässig durchtrennt werden. Durch die Montage des Messers am Werkzeugunterteil kann vermieden werden, dass der beheizte Siegelrahmen am Werkzeugoberteil das Messer erwärmt. Dadurch kann die Gefahr, dass die Deckelfolie am Messer kleben bleibt und das Messer verschmutzt, reduziert werden. Optional können Stillstandzeiten der Schalenverschließmaschine, um das Messer abzukühlen, vermieden werden. Im Idealfall kann eine Zugänglichkeit zum Messer, zum Beispiel zu Wartungszwecken, erleichtert werden. Dies kann einen Wartungsaufwand reduzieren. Das Messer kann über eine, insbesondere elektrische, pneumatische oder hydraulische, Antriebseinheit angetrieben werden. Das Messer kann zwischen einer eingefahrenen Position in Richtung des Werkzeugoberteils in eine ausgefahrene Position bewegt werden, um bei Kontakt mit der Deckelfolie diese zu trennen. Das Messer kann räumlich außerhalb der Verpackungsschalenaufnahme angeordnet sein, insbesondere derart, dass das Messer sich an der Verpackungsschalenaufnahme zwischen der eingefahrenen Position und der ausgefahrenen Position vorbeibewegen kann. Dadurch kann sichergestellt werden, dass die Deckelfolie im Trennbereich getrennt wird. Indem das Messer bewegt werden kann, kann die Deckelfolie besonders genau bezüglich der Verpackungsschale geschnitten werden. Nach dem Schneiden der Deckelfolie kann das Messer von der ausgefahrenen Position nach unten in Richtung der Verpackungsschalenaufnahme in die eingefahrene Position statt nach oben wegbewegt werden. Dadurch kann das Risiko, dass das Messer die Siegelung von der Verpackungsschale weg biegt oder gar löst, reduziert werden. Dies kann die Qualität der hergestellten Verpackung erhöhen und den Ausschuss reduzieren.

Vorzugsweise ist das Messer am Klemmrahmen, insbesondere starr oder bewegbar relativ zum Klemmrahmen, montiert. Dadurch kann die Deckelfolie besonders genau und zuverlässig durchtrennt werden. Es können sich ähnliche Vorteile wie bei der Montage des Messers am Werkzeugunterteil ergeben. Insbesondere können eine Langlebigkeit des Messers und eine Zugänglichkeit zum Messer verbessert werden. Im Idealfall können eine Genauigkeit des Schnitts erhöht und eine Qualität der hergestellten Verpackung verbessert werden. Ein Wartungsaufwand und Stillstandzeiten der Schalenverschließmaschine können reduziert werden. Um das Messer zu bewegen, kann dieses über eine, insbesondere elektrische, pneumatische oder hydraulische, Antriebseinheit angetrieben werden.

Optional kann das Messer am Werkzeugoberteil montiert sein. Das Messer kann bezüglich des Werkzeugoberteils bewegbar sein. Zum Beispiel kann das Messer mittels einer Befestigung um den Klemmrahmen herum in ein Inneres der Verschließstation geführt sein, um die Deckelfolie von unten zu schneiden. Beim Schließen der Verschließstation kann das Werkzeugunterteil an die Befestigung des Messers gepresst und die Befestigung wiederum kann an den Klemmrahmen und das Werkzeugoberteil gepresst werden. Es können sich ähnliche Vorteile wie bei der Montage des Messers am Werkzeugunterteil oder am Klemmrahmen ergeben.

Vorzugsweise schneidet das Messer die Deckelfolie außerhalb eines Rands der Verpackungsschale oder an einem Rand der Verpackungsschale. Dadurch kann, insbesondere abhängig von der herzustellenden Verpackung, die Deckelfolie genau bezüglich der Verpackungsschale geschnitten werden. Dies kann eine Qualität der hergestellten Verpackung verbessern und optional einen Aufwand zum Nacharbeiten der Verpackung sowie ein Ausschuss reduzieren.

Vorzugsweise erfolgt das Trennen der Deckelfolie während der Siegelbereich der Deckelfolie und die Verpackungsschale geklemmt sind. Dadurch kann die Zuverlässigkeit des Verfahrens erhöht werden. Es kann sichergestellt werden, dass der Siegelbereich der Deckelfolie und die Verpackungsschale zuverlässig gesiegelt werden können. Dies kann eine Qualität der hergestellten Verpackungen verbessern und optional ein Ausschuss reduzieren. Der Siegelbereich der Deckelfolie und die Verpackungsschale können mittels des Siegelrahmens und der Verpackungsschalenaufnahme geklemmt werden.

Vorzugsweise erfolgt das Trennen der Deckelfolie vor oder während des Siegelns der Deckelfolie an die Verpackungsschale. Eine Siegelung kann zwischen dem Siegelbreich der Deckelfolie und der Verpackungsschale, insbesondere deren Rand, erzeugt werden. Würde die Deckelfolie nach dem Siegeln getrennt, könnte die Siegelung beschädigt werden. Das Verfahren bietet somit den Vorteil, dass eine unvollständige und/oder beschädigte Siegelung vermieden und die Qualität der Siegelung und der hergestellten Verpackung erhöht werden kann. Im Idealfall kann auch eine Zeit für das Verfahren reduziert und eine Produktivität erhöht werden.

Ein weiterer Aspekt der Erfindung betrifft eine Verschließstation für eine Schalenverschließmaschine zum Aufbringen einer Deckelfolie auf eine Verpackungsschale, wobei die Verschließstation aufweist: eine Verpackungsschalenaufnahme, ein Werkzeugunterteil, ein Werkzeugoberteil mit einem beheizten Siegelrahmen, einen Klemmrahmen und ein Messer. Die Verpackungsschalenaufnahme ist zum Aufnehmen der Verpackungsschale ausgebildet. Zwischen dem Klemmrahmen und dem Werkzeugoberteil ist ein Klemmbereich der Deckelfolie klemmbar. Der Siegelrahmen ist zum Siegeln eines Siegelbereichs der Deckelfolie von oben an die Verpackungsschale vorgesehen. Das Messer weist eine in Richtung des Werkzeugoberteils weisende Messerklinge zum Schneiden der Deckelfolie in einem Trennbereich von unten auf.

Vorzugsweise ist das Messer, insbesondere relativ zum Werkzeugunterteil bewegbar, am Werkzeugunterteil montiert.

Vorzugsweise ist das Messer, insbesondere starr oder bewegbar zum Klemmrahmen, am Klemmrahmen montiert.

Vorzugsweise umfasst die Verschließstation eine Hubeinrichtung für den Siegelrahmen, wobei der Siegelrahmen und die Verpackungsschalenaufnahme gemeinsam mit dem Siegelbereich der Deckelfolie und der Verpackungsschale relativ zum Werkzeugunterteil bewegbar sind.

Ein weiterer Aspekt der Erfindung betrifft eine Schalenverschließmaschine umfassend eine Verschließstation, die dazu ausgebildet ist, eine Deckelfolie auf eine Verpackungsschale aufzubringen.

Die Schalenverschließmaschine kann eine Tiefziehverpackungsmaschine oder ein Traysealer sein.

Die Schalenverschließmaschine kann über eine Steuerung verfügen. Diese kann die in der Schalenverschließmaschine ablaufenden Prozesse steuern und überwachen.

Die Schalenverschließmaschine kann eine oder mehrere Arbeitsstationen aufweisen, insbesondere eine Formstation zum Formen, insbesondere Tiefziehen, von Verpackungsmulden in eine Folie, eine Befüllstation zum Befüllen der Verpackungsmulden mit Produkten, eine Verschließstation zum Versiegeln der Verpackungsmulden mit einer Oberfolie und eine Schneidstation zum Vereinzeln der Verpackungsmulden. Die Arbeitsstationen können in der genannten Reihenfolge hintereinander entlang einer Produktionsrichtung der Schalenverschließmaschine angeordnet sein.

Die von einem der Aspekte (Verfahren, Verschließstation oder Schalenverschließmaschine) beschriebenen Merkmale oder Erläuterungen können einzeln oder in Kombination auf die anderen Aspekte übertragen und mit diesen kombiniert werden.

Im Folgenden wird die Erfindung anhand von beispielhaften Ausführungsformen erläutert. Es zeigen:
- Figur 1: eine Seitenansicht einer Schalenverschließmaschine, die in Form eines Traysealers vorliegt,
- Figuren 2-8: schematische ausschnittsweise Seitenansichten einer Verschließstation gemäß einer Ausführungsform in unterschiedlichen Verfahrenszuständen, und
- Figur 9: eine schematische ausschnittsweise Seitenansicht einer Verschließstation gemäß einer weiteren Ausführungsform.

Gleiche technische Merkmale sind in den Figuren durchgehend mit den gleichen Bezugszeichen versehen.

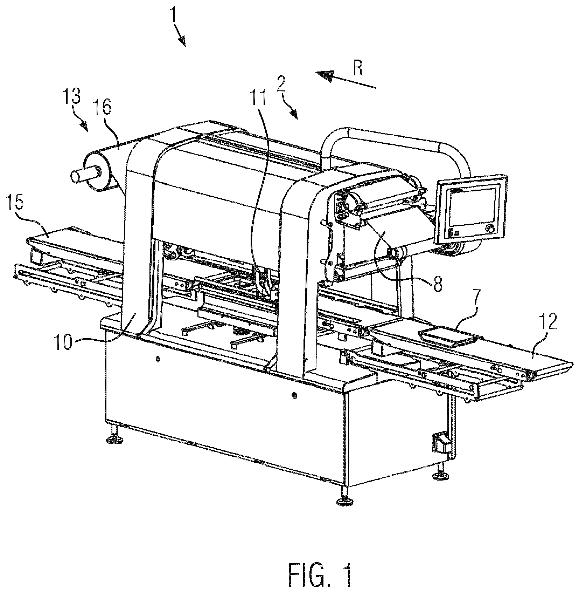

Figur 1 zeigt eine schematische Seitenansicht einer Schalenverschließmaschine 1 in Form eines Traysealers. Dieser umfasst ein Gestell 10, ein Zuführband 12 sowie eine in Produktionsrichtung R stromabwärts angeordnete Verschließstation 2, die später noch näher beschrieben wird. Durch das Zuführband 12 werden befüllte, aber zu diesem Zeitpunkt noch unverschlossene Verpackungsschalen 7 zur Verschließstation 2 befördert. Die Verpackungsschalen 7 werden mit einer Greifereinrichtung 11 in die Verschließstation 2 umgesetzt und dort mit einer von oben zugeführten Deckfolie 8 verschlossen, beispielsweise durch Ansiegeln der Deckfolie 8. Vor oder während des Ansiegelns der Deckelfolie 8 werden den Verpackungen bzw. Verpackungsverbünden entsprechende Bereiche der Deckfolie 8 in der Verschließstation 2 aus der Bahn der Deckfolie 8 ausgeschnitten. Es verbleibt ein Folienrestgitter 16 der Deckfolie 7, welches mit einer Vorrichtung 13 zum Aufwickeln der Deckelfolie 7 aufgewickelt wird. Die derart fertiggestellten Verpackungen werden über die Greifereinrichtung 11 aus der Verschließstation 2 auf ein Abführband 15 umgesetzt werden.

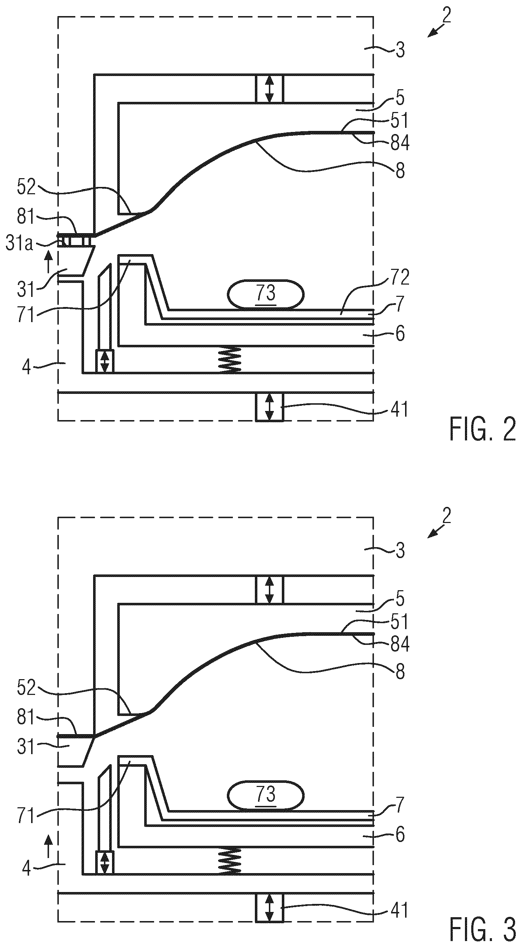

In den Figuren 2 bis 8 ist die Verschließstation 2 in einer schematischen ausschnittsweisen Seitenansicht in unterschiedlichen Verfahrenszuständen dargestellt. Die Figuren 2 bis 8 zeigen je nur einen linken Ausschnitt der Seitenansicht der Verschließstation 2. Dieser Ausschnitt kann am rechten Bildrand gespiegelt werden, um die vollständige Seitenansicht darzustellen.

In Figur 2 sind ein Werkzeugoberteil 3 mit einem Siegelrahmen 5, ein Werkzeugunterteil 4 und eine Verpackungsschalenaufnahme 6 dargestellt. Der Siegelrahmen 5 weist eine Innenfläche 51 sowie eine beheizte Siegelfläche 52 auf, die je mit einer nicht dargestellten Heizvorrichtung beheizt werden. An der Verpackungsschalenaufnahme 6 ist eine Verpackungsschale 7 angeordnet. Die Verpackungsschale 7 weist im Ausführungsbeispiel eine Vertiefung 72 und einen um die Vertiefung 72 umlaufenden Rand 71 auf. An der Vertiefung 72 ist ein Produkt 73 platziert.

Die Deckelfolie 8 besteht beispielsweise aus einem Verbundwerkstoff aus z.B. drei Folien, von denen die beiden äußeren Folien aus Polyethylen (PE) und die mittlere Folie aus Ethylvinylalkohol (EVOH) besteht. Eine Dicke der Deckelfolie 8 beträgt z.B. 95 µm und ist im gesamten Übergangsbereich 83 konstant. Eine Schmelztemperatur der Deckelfolie 8 beträgt ungefähr 170 °C. Eine Zugfestigkeit Rm der Deckelfolie 8 beträgt in einem kalten Zustand ungefähr 20 N/mm². Die Deckelfolie 8 kann ab einer Temperatur von ungefähr 80 °C verformt werden. Die Angaben zu Material, Temperatur und Dicke der Deckelfolie 8 sind lediglich beispielhaft gewählt und schränken den Schutzbereich nicht ein.

Wie aus Figur 2 hervorgeht, wird ein Innenbereich 84 der Deckelfolie 8 zwischen einem Klemmbereich 81 der Deckelfolie 8 mittels einer nicht dargestellten Saugvorrichtung an die Innenfläche 51 des Siegelwerkzeugs 5 gesaugt, die eine Temperatur von ungefähr 85 °C aufweist. Dadurch wird der Innenbereich gedehnt und kann sich besonders gut an die Verpackungsschale 7 und/oder das daran angeordnete Produkt 73 anpassen. In Figur 2 kontaktiert die Siegelfläche 52 des Siegelrahmens 5 die Deckelfolie 8 nicht.

Figur 2 zeigt weiterhin einen am Werkzeugoberteil 3 angeordneten plattenförmigen Klemmrahmen 31. Räumlich ist der Klemmrahmen 31 zwischen dem Werkzeugoberteil 3 und dem Werkzeugunterteil 4 angeordnet und an dem Werkzeugoberteil 3 relativ zu diesem bewegbar montiert. Zum Bewegen des Klemmrahmens 31 sind zwei pneumatische Antrieb 31a an dem Werkzeugoberteil 3 und dem Klemmrahmen 31 montiert. Die Deckelfolie 8, insbesondere der umlaufend geschlossener Klemmbereich 81, ist zwischen dem Werkzeugoberteil 3 und dem Klemmrahmen 31 angeordnet. Ausgehend von Figur 2 wird, um den Klemmbereich 81 der Deckelfolie 8 zu klemmen, der Klemmrahmen 31 in Richtung des Werkzeugoberteils 3 bewegt (siehe Figur 3). Dadurch ist die Deckelfolie 8 in der Verschließstation 2 fixiert und zur Verpackungsschale 7 ausgerichtet.

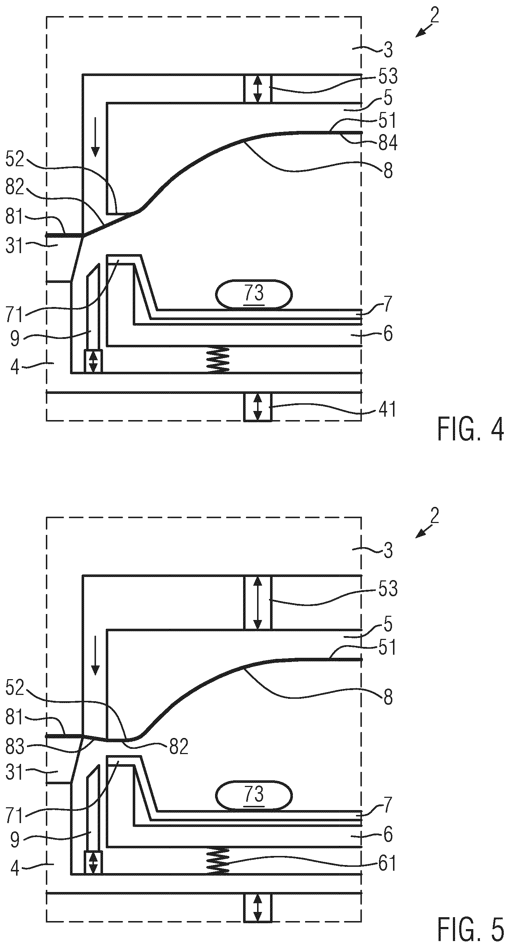

Um die Klemmung der Deckelfolie 8 zwischen dem Werkzeugoberteil 3 und dem Klemmrahmen 31 zu erhöhen, wird das Werkzeugunterteil 4 relativ zum Werkzeugoberteil 3 in Richtung des Klemmrahmens 31 bewegt. Dazu ist eine pneumatische Antriebsvorrichtung 41 am Werkzeugunterteil 4 vorgesehen. Durch die Aufwärtsbewegung des Werkzeugunterteils 4 wird der Klemmbereich 81 der Deckelfolie 8 mittelbar zwischen dem Werkzeugunterteil 4 und dem Werkzeugoberteil 3 eingeklemmt (siehe Figur 4). Außerdem wird die Verschließstation 2 gegenüber der Umgebung geschlossen.

Im nächsten Schritt wird der Siegelrahmen 5 mittels einer pneumatischen Hubeinrichtung 53 in Richtung des Werkzeugunterteils 4 bewegt. Während dieser Bewegung gelangt die Siegelfläche 52 des Siegelrahmens 5 mit einem Siegelbereich 82 der Deckelfolie 8 in Kontakt und erwärmt diesen (siehe Figur 5).

Zwischen dem Klemmbereich 81 und dem Siegelbereich 82 befindet sich ein Trennbereich 83. Während der Abwärtsbewegung des Siegelrahmens 5 wird in dem Trennbereich 83 der Deckelfolie 8 eine wachsende Zugspannung σ erzeugt. Da die Dicke der Deckelfolie 8 im gesamten Trennbereich 83 konstant ist, ist die Zugspannung σ über den gesamten Trennbereich 83 konstant.

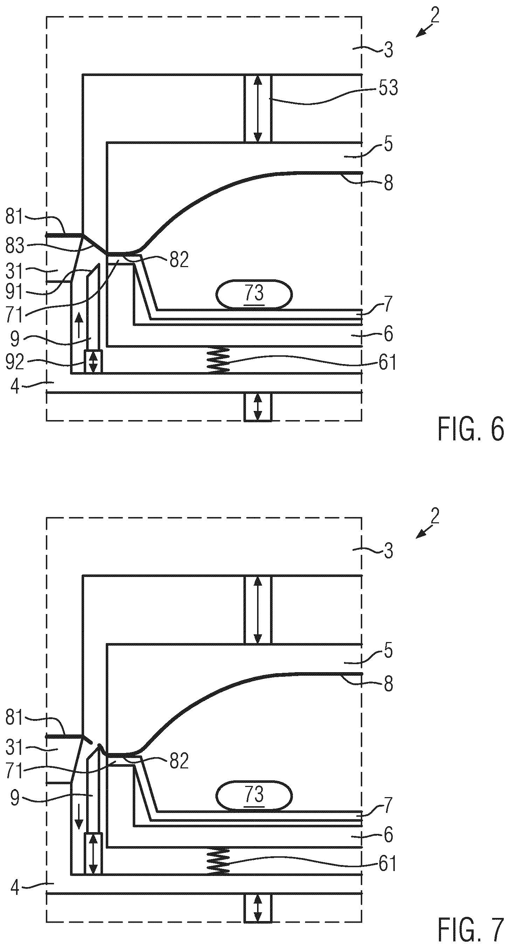

In Figur 6 ist die Verschließstation 2 in einer Position dargestellt, in der der Siegelrahmen 5 ausgehend von der Figur 5 noch weiter in Richtung des Werkzeugunterteils 4 bewegt ist. Bei der Abwärtsbewegung bewegt der Siegelrahmen 5 den Siegelbereich 82 der Deckelfolie 8 mit, bis sich der Siegelbereich 82 und die Verpackungsschale 7 an der Verpackungsschalenaufnahme 6 kontaktieren und geklemmt sind. Durch die Bewegung des Siegelrahmens 5 und des Siegelbereichs 82 wird die Zugspannung σ im Trennbereich 83 weiter erhöht. Die Verpackungsschalenaufnahme 6 ist ferner über einer Feder 61 am Werkzeugunterteil 4 gelagert. Dadurch ist die Verpackungsschalenaufnahme 6 gegenüber dem Werkzeugunterteil 4 passiv bewegbar. Zudem bildet die Feder 61 abhängig von ihrer Federsteifigkeit einen Gegenhalt für den Siegelrahmen 5 und begrenzt dessen Bewegung gegenüber dem Werkzeugunterteil 4.

Figur 6 zeigt die Verschließstation 2 in einem Zustand, in dem der Klemmbereich 81 und der Siegelbereich 82 der Deckelfolie 8 geklemmt sind. Figur 6 zeigt außerdem ein am Werkzeugunterteil 4 bezüglich des Werkzeugunterteils 4 bewegbareres Messer 9 zum Durchtrennen der Deckelfolie 8. Das Messer 9 ist außerhalb der Verpackungsschalenaufnahme 6 angeordnet. Über eine elektrische Antriebseinheit 92 kann sich das Messer 9 außerhalb der Verpackungsschalenaufnahme 6 in vertikaler Richtung bewegen. Mit dem am Werkzeugunterteil 4 angeordneten bewegbareren Messer 9 kann die Deckelfolie 8 besonders genau und zuverlässig durchtrennt werden. Zudem wird vermieden, dass der beheizte Siegelrahmen 5 am Werkzeugoberteil 3 das Messer 9 erwärmt. Dadurch wird die Gefahr, dass die Deckelfolie 8 am Messer 9 kleben bleibt und das Messer 9 verschmutzt, reduziert. Zudem wird eine Zugänglichkeit zum Messer 9, zum Beispiel zu Wartungszwecken, erleichtert.

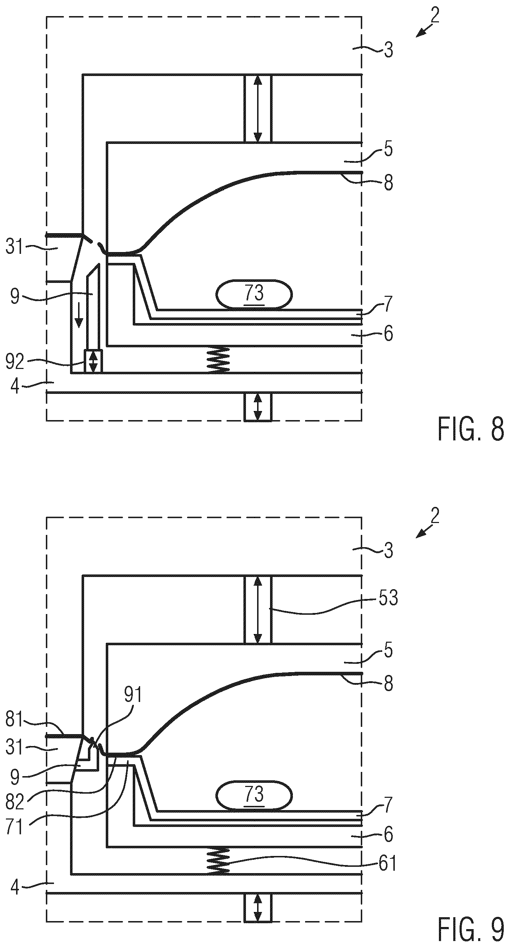

In Figur 7 ist das Messer 9 gegenüber der Stellung in Figur 6 nach oben bewegt. Bei der Aufwärtsbewegung des Messers 9 fährt das Messer 9 an der Verpackungsschalenaufnahme 6 vorbei. Eine nach oben in Richtung des Werkzeugoberteils 3 weisende Messerklinge 91 gelangt dabei im Trennbereich 83 der Deckelfolie 8 in Kontakt mit der Deckelfolie 8 und durchschneidet diese. Wie Figur 7 zeigt, wird die Deckelfolie 8, insbesondere in der Seitenansicht, von unten geschnitten. Das heißt, die Messerklinge 91 schneidet die Deckelfolie 8 von einer Unterseite der Deckelfolie her. Gemäß Figur 7 wurde die Deckelfolie 8 außerhalb des Rands 71 der Verpackungsschale 7 geschnitten. Die Deckelfolie 8 bedeckt somit vollständig den Rand 71 der Verpackungsschale 7. Nach dem Trennvorgang wird der Siegelbereich 82 der Deckelfolie 8 an den Rand 71 der Verpackungsschale 7 gesiegelt und die Verpackungsschale 7 somit verschlossen. Da die Deckelfolie 8 im Trennbereich 83 außerhalb des Siegelbereichs 82 zerschnitten wurde, beeinflusst der Schnitt die Siegelung nicht nachteilig. Außerdem wird nach dem Trennvorgang das Messer 9 nach unten in Richtung der Verpackungsschalenaufnahme 6 statt nach oben zurückbewegt (Figur 8). Dadurch wird das Risiko, dass das Messer 9 die Siegelung von der Verpackungsschale 7 weg biegt oder gar löst, reduziert. Dies erhöht die Qualität der hergestellten Verpackung und reduziert den Ausschuss.

Figur 9 zeigt eine schematische ausschnittsweise Seitenansicht einer Verschließstation 20. Die Verschließstation 20 ist im Wesentlichen gleich aufgebaut wie die Verschließstation 2. Die Elemente der Verschließstation 20, die denen der Verschließstation 2 entsprechen, sind mit denselben Bezugszeichen gekennzeichnet. Mit der Verschließstation 20 werden die in den Figuren 2 bis 5 dargestellten Verfahrensschritte analog ausgeführt.

Im Gegensatz zur Verschließstation 2 weist die Verschließstation 20 ein Messer 9 auf, das am Klemmrahmen 31 starr montiert ist und eine nach oben in Richtung des Werkzeugoberteils 3 weisende Messerklinge 91 aufweist. Ausgehend von der Stellung in Figur 5 wird der Siegelrahmen 5 in Richtung des Werkzeugunterteils 4 bewegt, sodass der Siegelrahmen 5 den Siegelbereich 82 der Deckelfolie 8 an die Verpackungsschale 7 an der Verpackungsschalenaufnahme 6 klemmt. Durch diese Bewegung wird eine Zugspannung σ der Deckelfolie 8 zwischen dem Klemmrahmen 31 und der Verpackungsschalenaufnahme 6, also im Trennbereich 83, erzeugt und mit zunehmender Bewegung weiter erhöht. Bei der Abwärtsbewegung des Siegelrahmens 5 kommt die Messerklinge 91 des Messers 9 in Kontakt mit der Deckelfolie 8 und schneidet diese im Trennbereich 83. Auch bei dieser Ausführungsform wird die Deckelfolie 8, insbesondere in der Seitenansicht, von unten geschnitten. Das heißt, die Messerklinge 91 schneidet die Deckelfolie 8 von einer Unterseite der Deckelfolie her. Nach dem Trennvorgang wird der Siegelbereich 82 der Deckelfolie 8 an den Rand 71 der Verpackungsschale 7 gesiegelt und die Verpackungsschale 7 somit verschlossen.

## Patentansprüche

1. Verfahren zum Aufbringen einer Deckelfolie (8) auf eine Verpackungsschale (7) mittels einer Verschließstation (2, 20), wobei die Verschließstation (2, 20) eine Verpackungsschalenaufnahme (6) zum Aufnehmen der Verpackungsschale (7), ein Werkzeugoberteil (3), ein Werkzeugunterteil (4) und einen Klemmrahmen (31) aufweist, wobei am Werkzeugoberteil (3) ein beheizter Siegelrahmen (5) angebracht ist, und wobei das Verfahren die folgenden Schritte umfasst:
Klemmen eines Klemmbereichs (81) der Deckelfolie (8) zwischen dem Klemmrahmen (31) und dem Werkzeugoberteil (3),
Durchführen einer Relativbewegung zwischen dem Siegelrahmen (5) und der Verpackungsschalenaufnahme (6), um einen Siegelbereich (82) der Deckelfolie (8) von oben an die Verpackungsschale (7) zu siegeln, und
Schneiden der Deckelfolie (8) von unten mit einem Messer (9).

2. Verfahren nach Anspruch 1, wobei der Klemmrahmen (31) und das Werkzeugoberteil (3) relativ zueinander bewegt werden, sodass der Klemmbereich (81) der Deckelfolie (8) dazwischen eingeklemmt wird, und wobei
das Werkzeugunterteil (4) und das Werkzeugoberteil (3), insbesondere gemeinsam mit dem Klemmrahmen (31), relativ zueinander bewegt werden, sodass der Klemmbereich (81) der Deckelfolie (8) mittelbar zwischen dem Werkzeugunterteil (4) und dem Werkzeugoberteil (3) eingeklemmt wird.

3. Verfahren nach Anspruch 1 oder 2, wobei der Siegelrahmen (5) und die Verpackungsschalenaufnahme (6) gemeinsam mit dem Siegelbereich (82) der Deckelfolie (8) und der Verpackungsschale (7) in Richtung des Werkzeugunterteils (4) abgesenkt werden, insbesondere wobei die Deckelfolie (8) während der Absenkbewegung durch den Kontakt der Deckelfolie (8) mit dem Messer (9) geschnitten wird.

4. Verfahren nach Anspruch 3, wobei die Deckelfolie, insbesondere ein Trennbereich (83), durch die Absenkbewegung zwischen dem Klemmrahmen (31) und der Verpackungsschalenaufnahme (6) gespannt wird.

5. Verfahren nach einem der vorangehenden Ansprüche, wobei das Messer (9) die Deckelfolie (8) in einem Trennbereich (83) schneidet, insbesondere wobei sich der Trennbereich (83) zwischen dem Klemmbereich (81) und dem Siegelbereich (82) befindet.

6. Verfahren nach einem der vorangehenden Ansprüche, wobei das Messer (9) relativ zum Werkzeugunterteil (4) bewegbar am Werkzeugunterteil (4) montiert ist.

7. Verfahren nach einem der Ansprüche 1 bis 5, wobei das Messer (9) am Klemmrahmen (31), insbesondere starr oder bewegbar relativ zum Klemmrahmen (31), montiert ist.

8. Verfahren nach einem der vorangehenden Ansprüche, wobei das Messer (9) die Deckelfolie (8) außerhalb eines Rands (71) der Verpackungsschale (7) oder an einem Rand (71) der Verpackungsschale (7) schneidet.

9. Verfahren nach einem der vorangehenden Ansprüche, wobei das Trennen der Deckelfolie (8) erfolgt, während der Siegelbereich (82) der Deckelfolie (8) und die Verpackungsschale (7) geklemmt sind.

10. Verfahren nach einem der vorangehenden Ansprüche, wobei das Trennen der Deckelfolie (8) vor oder während des Siegelns der Deckelfolie (8) an die Verpackungsschale (7) erfolgt.

11. Verschließstation (2, 20) für eine Schalenverschließmaschine (1) zum Aufbringen einer Deckelfolie (8) auf eine Verpackungsschale (7), wobei die Verschließstation (2, 20) aufweist:
eine Verpackungsschalenaufnahme (6),
ein Werkzeugunterteil (4),
ein Werkzeugoberteil (3) mit einem beheizten Siegelrahmen (5),
einen Klemmrahmen (31), und
ein Messer (9),
wobei die Verpackungsschalenaufnahme (6) zum Aufnehmen der Verpackungsschale (7) ausgebildet ist,
wobei ein Klemmbereich (81) der Deckelfolie (8) zwischen dem Klemmrahmen (31) und dem Werkzeugoberteil (3) klemmbar ist,
wobei der Siegelrahmen (5) zum Siegeln eines Siegelbereichs (82) der Deckelfolie (8) von oben an die Verpackungsschale (7) vorgesehen ist, und
wobei das Messer (9) eine in Richtung des Werkzeugoberteils (3) weisende Messerklinge (91) zum Schneiden der Deckelfolie (8) in einem Trennbereich (83) von unten aufweist.

12. Verschließstation nach Anspruch 11, wobei das Messer (9), insbesondere relativ zum Werkzeugunterteil (4) bewegbar, am Werkzeugunterteil (4) montiert ist.

13. Verschließstation nach Anspruch 11, wobei das Messer (9), insbesondere starr oder bewegbar zum Klemmrahmen (31), am Klemmrahmen (31) montiert ist.

14. Verschließstation nach einem der Ansprüche 11 bis 13, **gekennzeichnet durch** eine Hubeinrichtung (53) für den Siegelrahmen (5), wobei der Siegelrahmen (5) und die Verpackungsschalenaufnahme (6) gemeinsam mit dem Siegelbereich (82) der Deckelfolie (8) und der Verpackungsschale (7) relativ zum Werkzeugunterteil (4) bewegbar sind.

15. Schalenverschließmaschine (1) umfassend eine Verschließstation (2, 20), insbesondere nach einem der Ansprüche 11 bis 14, die dazu ausgebildet ist, das Verfahren nach einem der Ansprüche 1 bis 10 auszuführen.
